(19) Europäisches Patentamt
European Patent Office
Office européen des brevets

(11) **EP 2 840 391 A1**

(12) **EUROPEAN PATENT APPLICATION**

(43) Date of publication:
**25.02.2015 Bulletin 2015/09**

(51) Int Cl.:
**G01N 29/22** (2006.01)     **G01N 29/24** (2006.01)
**G01N 29/26** (2006.01)     **G01N 29/32** (2006.01)
**G10K 11/34** (2006.01)

(21) Application number: **14180996.2**

(22) Date of filing: **14.08.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **20.08.2013 JP 2013170048**

(71) Applicant: **Mitsubishi Hitachi Power Systems, Ltd.
Yokohama-shi, Kanagawa 220-8401 (JP)**

(72) Inventors:
• **Suzuki, Yutaka**
  **Tokyo 100-8280 (JP)**
• **Chiba, Hiroaki**
  **Yokohama, Kanagawa 220-8401 (JP)**
• **Kudo, Takeshi**
  **Yokohama, Kanagawa 220-8401 (JP)**

(74) Representative: **MERH-IP
Matias Erny Reichl Hoffmann
Paul-Heyse-Strasse 29
80336 München (DE)**

(54) **Ultrasonic testing sensor and ultrasonic testing method**

(57)     An ultrasonic testing sensor and an ultrasonic testing method are provided which achieve a high sensitivity of three-dimensional ultrasonic testing and a high S/N ratio, do not require development of a sensor for each inspection object, and reduce the cost of developing a sensor.

The ultrasonic testing method is performed with the use of the ultrasonic testing sensor while a total length d, extending in a direction parallel to an ultrasonic scanning direction, of ultrasonic elements (5) to be simultaneously excited with a single exciter is controlled to be in a range ensuring that $2d \cdot \sin\theta = n \cdot \lambda$, where $\lambda$ is a wavelength of an ultrasonic wave (3), n is an integer of 1 or 2, and $\theta$ is an angle at which the ultrasonic wave (3) is incident.

# FIG. 1B

## THREE-DIMENSIONAL ULTRASONIC TESTING METHOD

**Description**

BACKGROUND OF THE INVENTION

1. Field of the Invention

The present invention relates to an ultrasonic testing sensor to be used for three-dimensional ultrasonic inspections and to an ultrasonic testing method for the three-dimensional ultrasonic inspections. 2. Description of the Art Background

The ultrasonic testing in which the inside of an object can be examined in a non-destructive manner has been under development. In the ultrasonic testing developed in recent years, a matrix array sensor composed of ultrasonic elements (hereinafter referred to as elements) two-dimensionally arrayed in a matrix form has been generally used. The three-dimensional ultrasonic testing where an object is tree-dimensionally scanned with an ultrasonic wave having its delay time adjusted has been common. Since focusing directions of the elements included in the matrix array sensor are changeable according to a direction in which the elements are arrayed, the matrix array sensor having the elements two-dimensionally arrayed can scan an object with an ultrasonic wave in two directions. In addition, as a focusing distance is changeable as well, three-dimensional scanning, combined with two-axis scanning, can be achieved.

JP-2012-117825-A describes an ultrasonic sensor that is capable of inspecting a deep portion by expanding an aperture in such an ultrasonic inspection as above, the sensor having its SN ratio enhanced. According to JP-2012-117825-A, when pitches between the elements included in the matrix array sensor are set to be larger than $\lambda/2$, grating lobes in addition to main lobes are generated. Thus, when the aperture of the array sensor is expanded due to larger elements, an effect of noise is reduced by arranging the elements in such a manner that the noise will appear in a region outside an ultrasonic testing range.

SUMMARY OF THE INVENTION

A sensor, having elements arranged at intervals of $\lambda/2$ or less, where grating lobes do not occur has been conventionally used. Meanwhile, a matrix array sensor that is composed of ultrasonic elements arranged at intervals of $\lambda/2$ or larger in order to expand a sensor aperture for three-dimensional ultrasonic testing (hereinafter referred to as 3D-UT) has been developed as described in the aforementioned JP-2012-117825-A.

Although JP-2012-117825-A describes that side lobes when the number of elements to be simultaneously excited increases are incident on a region outside an ultrasonic scanning range, improving the intensity of a signal while the side lobes with a low incident intensity are incident on the ultrasonic scanning range is not taken into consideration in JP-2012-117825-A. In order to cause grating lobes when the number of elements to be simultaneously excited increases to be incident on a region outside the scanning range, it is necessary to develop a matrix array sensor for each inspection object.

An object of the present invention is to provide an ultrasonic testing sensor and an ultrasonic testing method that achieve a high sensitivity of three-dimensional ultrasonic testing and a high S/N ratio, do not require development of a sensor for each object to be inspected, and reduce the development cost.

According to the present invention, in order to accomplish the aforementioned object, a total length d, extending in a direction parallel to an ultrasonic scanning direction, of ultrasonic elements to be simultaneously excited with a single exciter is controlled to be in a range ensuring that $2d \cdot \sin\theta = n\lambda$, where $\lambda$ is a wavelength of an ultrasonic wave, n is an integer of 1 or 2, and $\theta$ is an angle at which the ultrasonic wave is incident.

The present invention makes it possible for ultrasonic testing to be conducted while the intensity of grating lobes to be generated and incident on an ultrasonic scanning range is being controlled. A high sensitivity of the three-dimensional ultrasonic testing and a high S/N ratio can be thereby achieved. In addition, since the intensity of grating lobes to be generated can be controlled with the same sensor and an ultrasonic testing device, it is unnecessary to develop a sensor for each inspection object, reducing the development cost as a result.

BRIEF DESCRIPTION OF THE DRAWINGS

FIGS. 1A and 1B are diagrams describing a 3D-UT method;
FIG. 2 is a diagram describing a limiting factor of intervals between elements included in a matrix array sensor used for a phased array UT inspection;
FIGS. 3A to 3C are diagrams describing a method for improving a sensitivity of the matrix array sensor used for the phased array UT inspection;

FIG. 4 is a diagram describing a definition of a scanning direction in 3D-UT;

FIGS. 5A to 5D are diagrams describing a method of controlling a direction in which grating lobes are generated in a first embodiment;

FIG. 6 is a diagram illustrating dependency of an angle at which grating lobes are generated on intervals between elements;

FIGS. 7A to 7C are diagrams illustrating an algorithm for determining the intervals between the elements in the first embodiment;

FIG. 8 is a block diagram of an ultrasonic testing system according to the first embodiment;

FIG. 9 is a structure diagram illustrating a switch for switching connections between exciters and the elements according to the first embodiment;

FIG. 10 is a flowchart of an ultrasonic testing method according to the first embodiment;

FIGS. 11A and 11B are diagrams describing a method for controlling a direction in which grating lobes are generated according to a second embodiment;

FIG. 12 is a diagram illustrating an element array that facilitates control of the direction in which the grating lobes are generated;

FIG. 13 is a diagram illustrating another element array that facilitates controlling the direction in which the grating lobes are generated;

FIG. 14 is a block diagram of an ultrasonic testing system according to the second embodiment;

FIG. 15 is a flowchart of an ultrasonic testing method according to the second embodiment; and

FIG. 16 is graphs explaining an ultrasonic scanning direction according to the second embodiment.

DESCRIPTION OF THE PREFERRED EMBODIMENTS

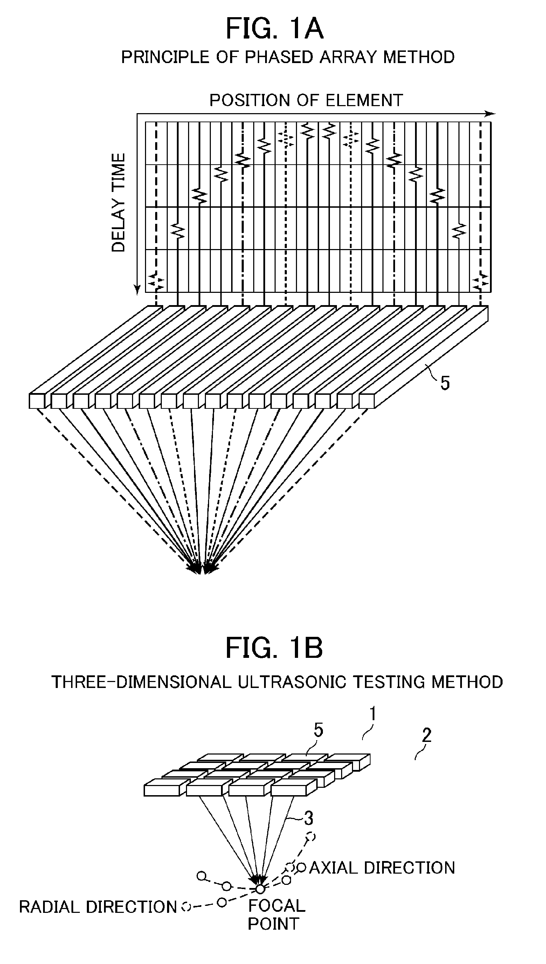

FIG. 1A describes a principle of a phased array method. Ultrasonic testing is performed by increasing sound pressure at the focal point after causing the ultrasonic waves to reach the focal point from the elements 5. The waves are made to reach it as a result of adjusting temporal differences (hereinafter referred to as delay time) of starting to transmit ultrasonic waves from elements 5 that are one-dimensionally arranged in parallel, the elements 5 being arranged to be in an ultrasonic testing sensor so that the ultrasonic waves will be simultaneously reaching a set focal point. The ultrasonic waves are scanned by adjusting the delay time while focusing the ultrasonic waves on the focal point.

FIG. 1B describes a three-dimensional ultrasonic testing method. The ultrasonic testing is performed with the use of a matrix array sensor 1 provided with elements 5 two-dimensionally arrayed in a matrix form while the adjusting delay time. Since a focusing direction can be changed in directions in which the elements are arrayed, the matrix array sensor 1 that has the elements 5 two-dimensionally arrayed in the matrix form can emit ultrasonic waves 3 and scan an object with the ultrasonic waves 3 in the two directions. In addition, the matrix array sensor 1 can perform three-dimensional scanning when combined with the two-axis scanning since a focal length is changeable.

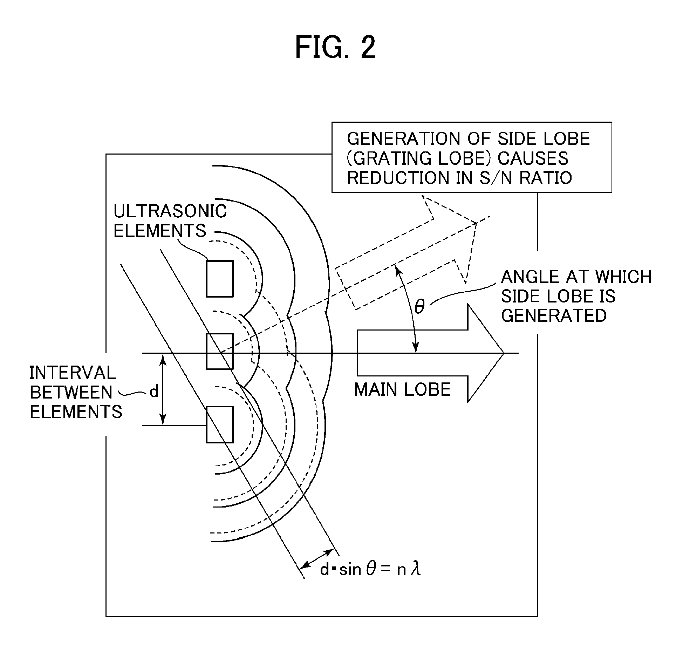

FIG. 2 illustrates a limiting factor of intervals between the elements included in the matrix array sensor. When the ultrasonic waves are focused on the focal point, grating lobes that causes the phases of ultrasonic waves to be aligned in a region outside the focal point is generated. An angle $\theta$ between a direction in which the grating lobes are generated and a direction in which a main lobe propagates to the focal point is expressed by Equation (1).

$$2d \cdot \sin\theta = n \cdot \lambda \qquad \text{Equation (1)}$$

In Equation (1), d is an interval (mm) between ultrasonic elements, n is an integer, and $\lambda$ is a wavelength (mm) of an ultrasonic wave.

If the grating lobes are incident on an ultrasonic scanning range for inspection and a reflection source exists in a direction in which the grating lobes are incident, a false signal is generated. Intervals between ultrasonic elements of a conventional sensor are limited to a range where grating lobes expressed by Formula (2) given by Equation (1) is not generated.

$$n \cdot \lambda \ / \ 2d = \sin\theta > 1$$

$$\lambda \ / \ 2 > d \ (n = 1) \qquad \text{Formula (2)}$$

In two-dimensional ultrasonic testing using the sensor having the elements 5 one-dimensionally arrayed, ultrasonic waves are only one-dimensionally scanned, and intervals between the elements in a direction parallel to an ultrasonic scanning direction are limited by Formula (2). However, intervals between the elements in a direction perpendicular to the ultrasonic scanning direction can be arbitrarily set. There is also a case where a sensor has elements arrayed at intervals of $4\lambda$ in a direction perpendicular to an ultrasonic scanning direction as an example. On the other hand, since the length of each side of the elements two-dimensionally arrayed in the matrix array sensor is limited to $\lambda/2$, the area of the matrix array sensor is 1/8 of the aforementioned sensor having the elements arrayed at the intervals of $4\lambda$, leading to the lower sensitivity of the matrix array sensor.

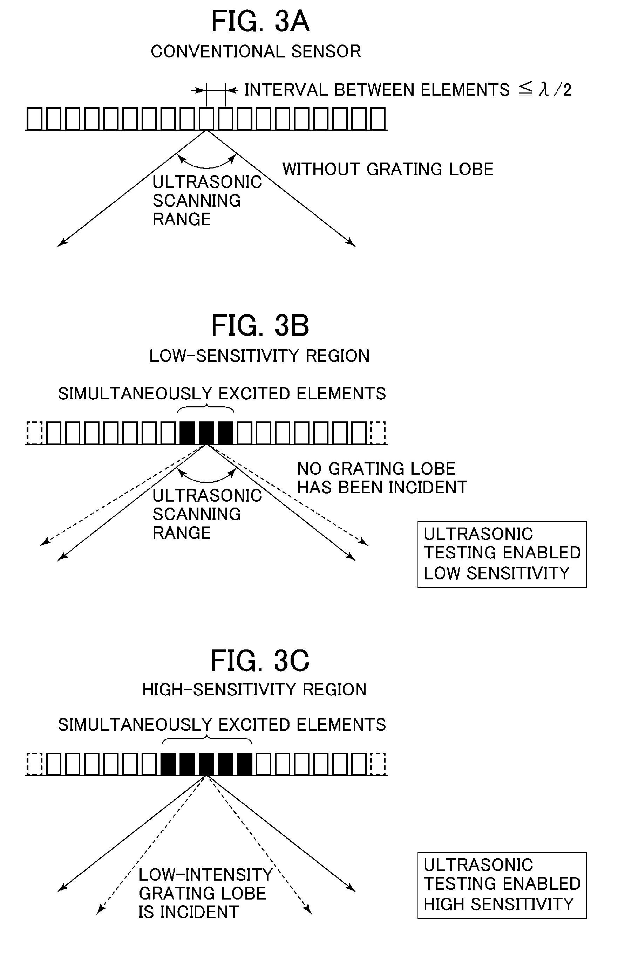

According to JP-2012-117825-A, the matrix array sensor composed of the plurality of elements is used to expand the usable area of the sensor by increasing the number of ultrasonic elements arrayed in a direction perpendicular to an ultrasonic scanning direction and to be simultaneously excited with a single exciter. As illustrated in FIG. 3B, however, the sensor described in JP-2012-117825-A generates grating lobes in a region outside an ultrasonic scanning range in a case where the number of elements to be simultaneously excited increases. JP-2012-117825-A does not take into account that a signal intensity will be improved while grating lobes with a low incident intensity is being incident on the ultrasonic scanning range.

The present invention is for providing an ultrasonic testing method that allows grating lobes with a certain intensity or less to be incident on an ultrasonic scanning range. The embodiments of the present invention are described below with reference to the accompanying drawings.

First Embodiment

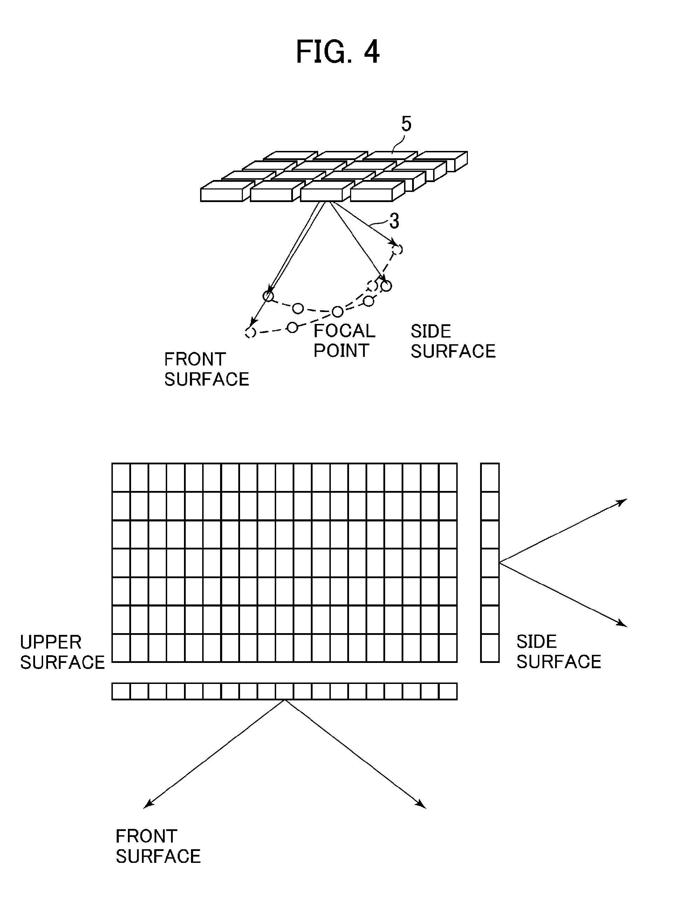

A first embodiment of the present invention is described with reference to FIGS. 4 to 10 and Equation (1). FIG. 4 illustrates the arrangement of the elements 5 of the matrix array sensor 1 according to the first embodiment and further defines an ultrasonic scanning direction. In the present invention, the conventional matrix array sensor that has the rectangular elements 5 two-dimensionally arrayed is used. A surface that is perpendicular to an upper surface and parallel to one side of each rectangular element when the sensor is viewed from the side of the upper surface is defined as a front surface, while a surface that is perpendicular to the upper surface and parallel to the other side of each rectangular element when the sensor is viewed from the side of the upper surface is defined as a side surface. The scanning direction is uniquely determined on the basis of a scanning angle (front surface scanning angle) on the front surface and a scanning angle (side surface scanning angle) on the side surface.

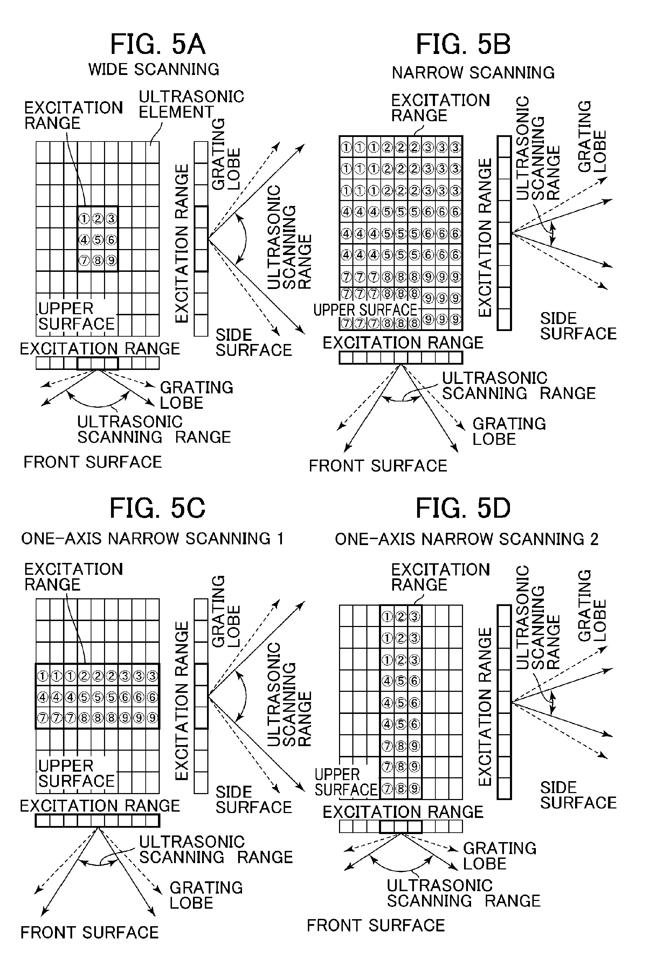

FIGS. 5A to 5D are conceptual diagrams describing a method of controlling a direction in which grating lobes are generated. FIG. 5A is the conceptual diagram illustrating a case where a single element is excited with a single exciter for conventional ultrasonic testing. They further illustrate an excitation pattern in which both the front surface and the side surface have a wide ultrasonic scanning range. Numbers with circles illustrated for elements correspond to the exciters configured to excite the elements. In this case, a single exciter excites a single element. Since intervals between the elements are small in FIG. 5A, grating lobes are generated in a region outside the ultrasonic scanning ranges. FIG. 5B illustrates an excitation pattern in which two scanning ranges are narrower than the scanning ranges illustrated in FIG. 5A. In this case, the number of elements arranged in a direction of the front surface and to be simultaneously excited with a single exciter and the number of elements arranged in a direction of the side surface and to be simultaneously excited with a single exciter are made to be nine times larger, and the sensitivity is improved without a reduction in an S/N ratio. Since the intensity of signals to be transmitted and received are in proportion to the square of the area of the sensor, the intensity of signals to be transmitted and received in the excitation pattern illustrated in FIG. 5B is made to be 81 times as strong as that in FIG. 5A without an increase in noise. However, intervals between elements to be simultaneously excited are extended, and angles at which grating lobes are generated are smaller than those in FIG. 5A. Thus, the ultrasonic scanning ranges are set to be narrower due to the smaller angles so that grating lobes will not be generated in the ultrasonic scanning ranges.

FIG. 5C illustrates an excitation pattern having a narrower ultrasonic scanning range of the front surface than the excitation pattern illustrated in FIG. 5A, while FIG. 5D illustrates an excitation pattern having a narrower ultrasonic scanning range of the side surface than the excitation pattern illustrated in FIG. 5A. The number of elements arranged in the direction of the front surface and to be simultaneously excited with a single exciter is increased by threefold in the pattern illustrated in FIG. 5C, while the number of elements arranged in the direction of the side surface and to be simultaneously excited with a single exciter is increased by threefold in the pattern illustrated in FIG. 5D. By virtue of changing the number of elements to be simultaneously excited on the basis of an ultrasonic scanning range, the intensities of signals to be transmitted and received can be stronger by ninefold without an increase in noise. However, intervals between elements arranged in the direction of the front surface and to be simultaneously excited and intervals between elements arranged in the direction of the side surface and to be simultaneously excited are extended, and angles at which grating lobes are generated are narrower due to the extended intervals of the elements.

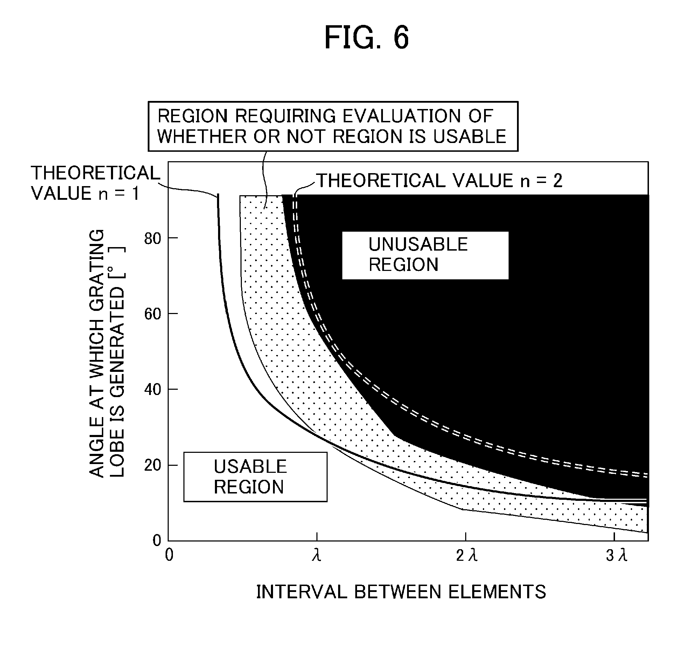

FIG. 6 illustrates dependency of a direction in which grating lobes are generated on intervals between elements.

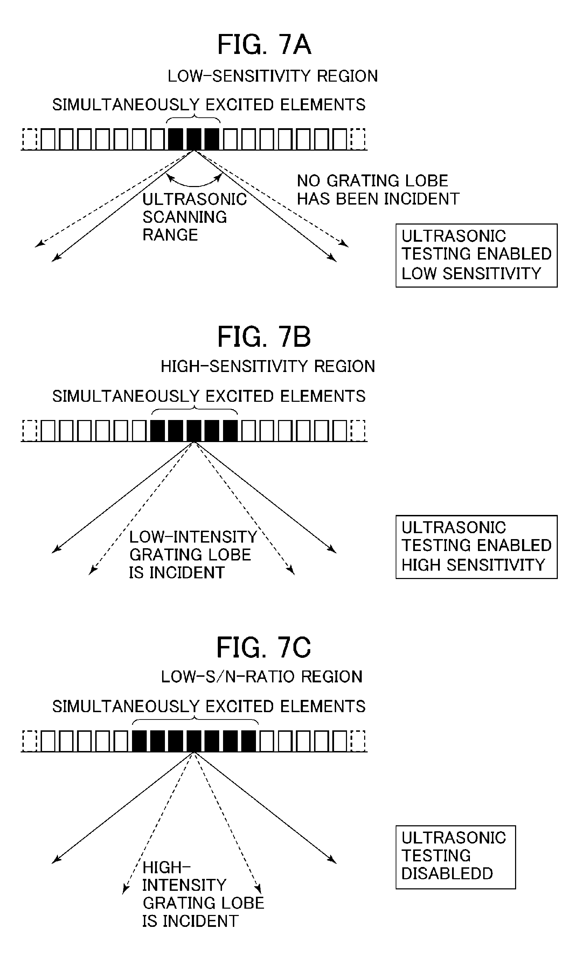

A dark gray region represents a range in which a relative ratio of the intensity of the grating lobes to the intensity of a main lobe is -20 dB or higher. A light gray region represents a range in which the intensity of the grating lobes to the intensity of the main lobe is between -20 dB and -40 dB. A white region represents a range in which the relative ratio is -40 dB or less and it is not necessary to consider about grating lobes. The white region is used for the conventional inspection, whereas the light gray region represents a region to be determined whether the region is to be used on the basis of a ratio of the intensity of a signal reflected from a defect to the intensity of noise caused by the grating lobes upon detection of a defect signal. The light gray region to be determined whether to be used is a range where n that is used in Equation (1) and represents a theoretical value of the direction in which the grating lobes are generated is in a range of 1 to 2. As illustrated in FIGS. 7A to 7C, the number of elements to be simultaneously excited is sequentially changed, an S/N ratio obtained when an angle at which the grating lobes are changed is measured, and the number of elements to be simultaneously excited is determined so that the intensity of the generated grating lobes will be lower than or equal to a value that will not affect the ultrasonic testing in the present invention.

FIG. 7A illustrates a case where the number of elements to be simultaneously excited does not cause the grating lobes to be incident on the scanning range. In this case, the ultrasonic testing can be performed on all regions of an ultrasonic testing range. However, the number of ultrasonic elements to be simultaneously excited is so small that the sensitivity is low. In a case illustrated in FIG. 7B, when the number of elements to be simultaneously excited increases, grating lobes with a low intensity are incident on the scanning range. However, the number of elements to be simultaneously excited can be larger, and thus the sensitivity improves. In a case illustrated in FIG. 7C, when the number of elements to be simultaneously excited further increases, grating lobes with a high intensity are incident on the scanning range. In the present embodiment, the intensity of the defect signal is made to be stronger by simultaneously exciting the elements in the incident state illustrated in FIG. 7B without a reduction in the S/N ratio. Moreover, when the intervals between the elements are $2\lambda$ or larger as illustrated in FIG. 6, dependency of the direction in which grating lobes are generated on the intervals between the elements becomes lower. Specifically, when the intervals between the elements are changed so as to be $2\lambda$ or larger, a change in the angle at which the grating lobes are generated becomes smaller, compared with a case where the intervals between the elements are smaller than or equal to $2\lambda$. Thus, if the sum of the sizes of each pair of adjacent elements is $2\lambda$ or larger, a controlled range of the direction in which the grating lobes are generated will be narrower. Accordingly, the intervals between the elements are set to intervals of $2\lambda$ or less in the present embodiment. In this instance, a total length of multiple elements to be simultaneously excited is set to an interval of $2\lambda$ or less, resulting in the maximum length of a single element to be $\lambda$ or less.

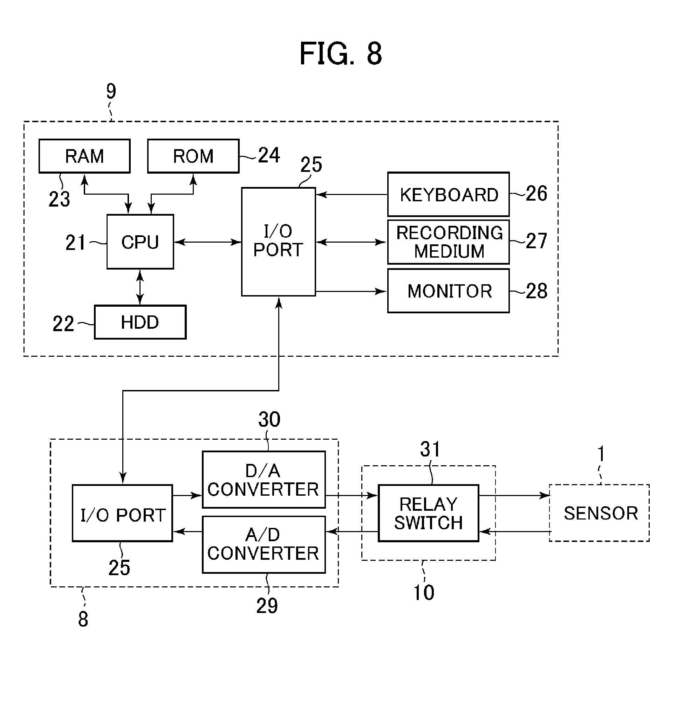

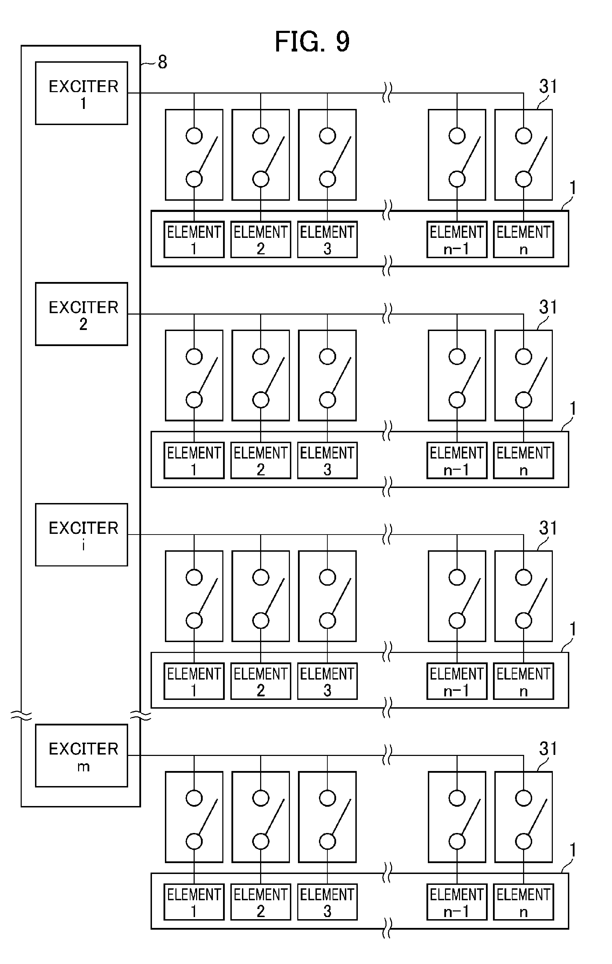

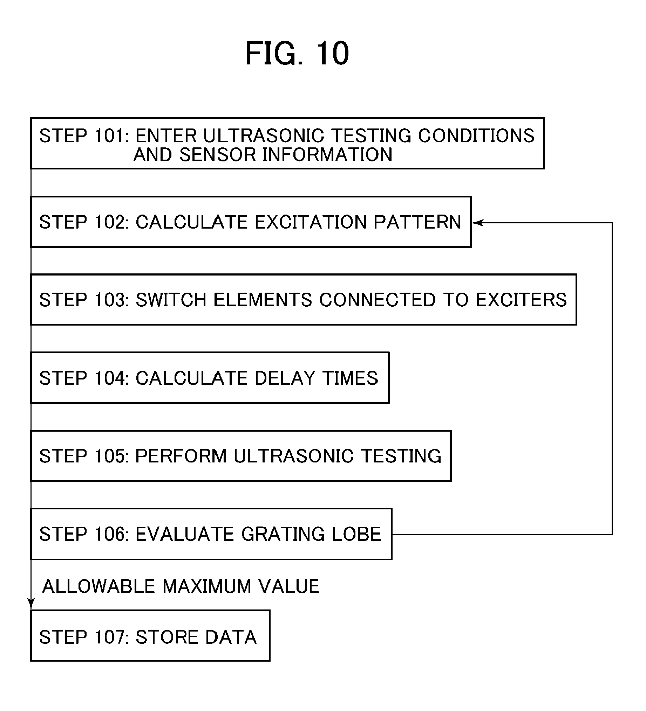

An ultrasonic testing method according to the present embodiment is described with reference to FIGS. 8 to 10. FIG. 8 is a block diagram of an ultrasonic testing system according to the first embodiment. FIG. 9 is a structure diagram illustrating a switch for switching connections between exciters for elements and the elements. FIG. 10 is a flowchart of the ultrasonic testing method according to the first embodiment.

Step 101 is a step of entering ultrasonic testing conditions such as an ultrasonic scanning direction and a focal length, and sensor information such as the sizes of the elements of the sensor, the number of the constituent elements, the element arrangement, and a frequency (wavelength). The ultrasonic testing conditions and the sensor information are entered with at least one of a keyboard 26 of a personal computer 9 and a recording medium 27 of the personal computer 9, transferred through an I/O port 25 of the personal computer to a CPU 21 of the personal computer 9, and stored in at least one of a random access memory (RAM) 23 and a hard disk drive (HDD) 22. The recording medium 27 includes a DVD and a Blu-ray disc. The HDD 22 includes an SSD.

Step 102 is a step of analyzing a total length d, extending in a direction parallel to an ultrasonic scanning direction, of elements to be simultaneously excited with a single exciter. A program for calculating Equation (1) is stored in at least one of a read only memory (ROM) 24, the RAM, and the HDD. The length d is in a range determined by the value n that is included in Equation (1) and in a range of 1 to 2. A value obtained by dividing the calculated length d by an actual interval between each pair of the elements represents the number of elements arranged in a direction parallel to the ultrasonic scanning direction and to be simultaneously excited. Since this value is half-integral, a value obtained by rounding the half-integral value off to the nearest whole number or rounding the half-integral value down or up to the nearest whole number turns out to be an initial number of elements to be simultaneously excited. The calculation result is stored in at least one of the RAM and the HDD and is displayed on a monitor 28 through the I/O port.

Step 103 is a step of switching connections between the exciters and the elements on the basis of the analysis, carried out in step 102, of the elements to be simultaneously excited. FIG. 9 is the structure diagram illustrating the switch for switching the connections between the exciters for the elements and the elements. FIG. 9 illustrates a case where the matrix array sensors 1 each including a number n of the elements 5 are connected to the respective exciters of an ultrasonic testing device 8 having a number m of D/A converters 30 serving as the exciters. The exciters are coupled to the elements through relay switches 31 of the connection element switch 10. The connections between the exciters and the elements are changed over when the relay switches are turned on or off on the basis of the analysis result displayed on the monitor in step 102.

Step 104 is a step of calculating delay time with the use of the ultrasonic testing conditions entered in step 101 and the result of analyzing an excitation pattern in step 102. A program for analyzing delay time is stored in at least one of the read only memory and the HDD. The CPU executes the program and calculates the delay time. Results of calculating the delay time are stored in at least one of the RAM and the HDD.

Step 105 is a step of performing the ultrasonic testing. The D/A converters convert digital signals ordering start of excitation into voltages through the I/O port of the personal computer and an I/O port of the ultrasonic testing device. Then, the D/A converters apply the voltages to the matrix array sensors which subsequently convert the voltages into vibrations. The vibrations reflected in an object 2 to be inspected reach the matrix array sensors thereafter. The vibrations that have reached the matrix array sensors are converted into voltages. The voltages in turn are transformed into digital signals by A/D converters 29 and transferred to the CPU through the I/O port of the ultrasonic testing device and the I/O port of the personal computer. The CPU stores ultrasonic testing data in at least one of the RAM and the HDD as well as makes the results of the ultrasonic testing displayed on the monitor through the I/O port.

Step 106 is a step of evaluating an S/N ratio on the basis of the results of the ultrasonic testing performed in step 105. If the intensity of noise corresponding to a focal length and a refraction angle at which a defect is estimated to be detected by defect detection data and stress analysis is lower than or equal to a standard intensity, the process proceeds to step 107. The process is terminated after the ultrasonic testing data is stored in at least one of the RAM and the HDD in step 107. The intensity of a defect signal is calculated from a defect size allowed in order to maintain the soundness. It is preferable that the standard S/N ratio be determined to be 6 dB or higher so that the defect signal will be easily identified. Meanwhile, if the intensity of noise caused by grating lobes is higher than the standard intensity, the process returns to step 102, the number of elements to be simultaneously excited is reduced, and steps 102 to 106 are performed again. If the intensity of the noise caused by grating lobes is lower than the standard intensity, the process returns to step 102, the number of elements to be simultaneously excited is increased, and steps 102 to 106 are performed again. Moreover, step 106 may be omitted in case the number of elements to be simultaneously excited, where the intensity of grating lobes falls in an acceptable range, has been evaluated in advance.

Step 107 is a step of storing data of the results of the ultrasonic testing. Specifically, if the S/N ratio is in a standard range in step 106, the data stored in step 105 is stored as the results of the ultrasonic testing.

A maximum value of an increase in the S/N ratio when the scanning range of the refraction angle is in a range of -20° to +20° is calculated to be $(2.2/1.6)^2 = 1.9$-fold according to the following factors: a conventional element pitch of $1.6\lambda$ corresponding to an angle of 20° at which grating lobes are generated and further corresponding to a boundary between the white region and the light gray region in FIG. 6; and a maximum element pitch of $2.2\lambda$ in the present invention and corresponding to a boundary between the light gray region and the dark gray region. In addition, a maximum value of an increase in the S/N ratio when the scanning range of the refraction angle is in a range of -40° to +40° is calculated to be $(1.3/0.7)^2 = 3.4$-fold according to a conventional element pitch of $0.7\lambda$ and a maximum element pitch $1.3\lambda$ in the present invention.

Since the present invention is configured in the aforementioned manner, an aperture of the sensor can be expanded as a result of allowing incidence of grating lobes with a certain intensity or less, and a high sensitivity of the three-dimensional ultrasonic testing and a high S/N ratio can be achieved. In addition, even if an inspection object is changed to another object, the other object can be inspected with the same sensor and the same ultrasonic testing device. It is thus unnecessary to develop sensors for each inspection object, thereby reducing the development cost.

Second Embodiment

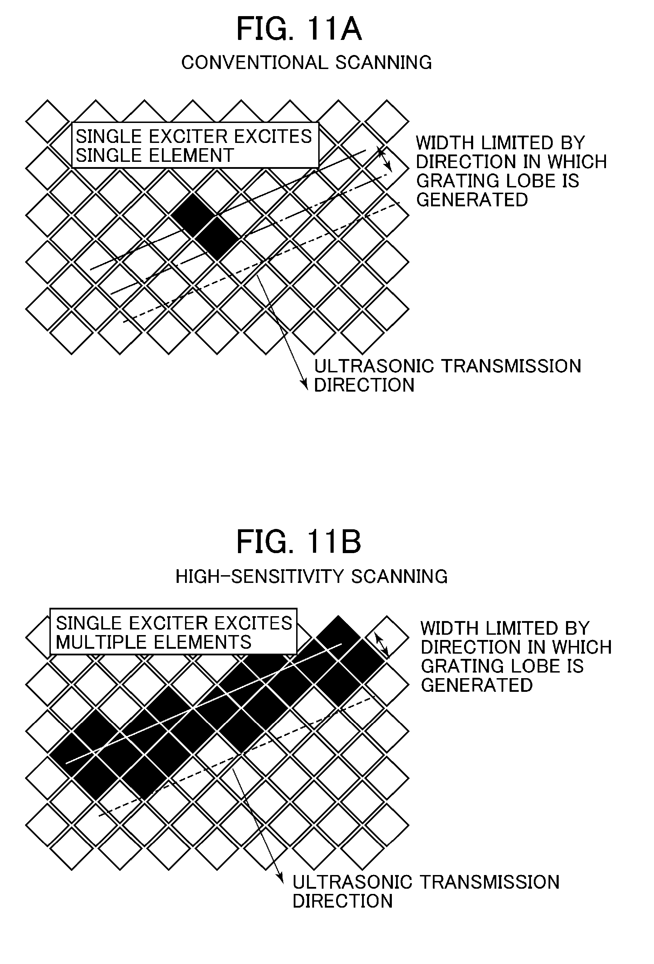

A second embodiment of the present invention is described with reference to FIGS. 11A to 16, Equation (1), and Equation (3).

FIGS. 11A and 11B are diagrams describing an algorithm for determining an excitation pattern. In the second embodiment, the sensitivity is improved without a reduction in the S/N ratio as a result of the following manners: increasing the number of elements arranged in the direction perpendicular to the ultrasonic scanning direction viewed from the side of the upper surface, the elements being to be simultaneously excited; and setting the width of a group of elements to fall within the range of "the value n = 1 to 2" in Equation (1), the group of the elements being arranged in the direction parallel to the ultrasonic scanning direction viewed from the side of the upper surface and being to be simultaneously excited.

Since an area in which the sensor can be installed is limited depending on an object to be inspected, it is preferable that the elements be arranged so that there will be no gap between the elements in the ultrasonic testing of the present invention. The shapes of the elements that do not have a gap between the elements include a quadrangular, hexagonal, and triangular shape.

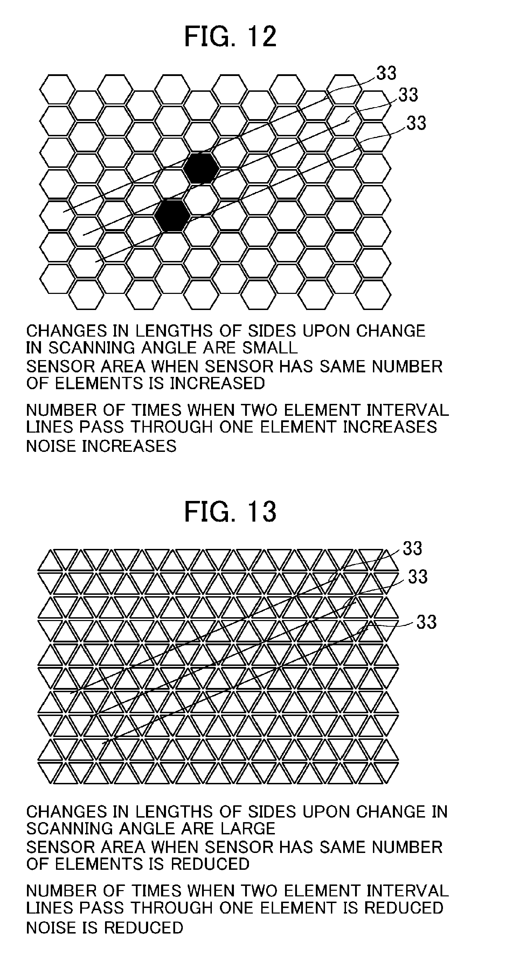

FIG. 12 illustrates the arrangement of hexagonal ultrasonic elements. Even if the ultrasonic scanning direction viewed from the side of the upper surface changes, a shift in an interval between hexagonal elements arranged in an ultrasonic transmission direction and to be simultaneously excited will be smaller as compared with a shift in an interval between quadrangular elements. The area of each hexagonal element within the same element interval accordingly enlarges. For this reason, this arrangement has an advantage in that the area of the sensor can be expanded when the sensor has the same number of elements. Since the area of each element becomes larger, the number of times when a plurality of lines 33 (hereinafter referred to as element interval lines) pass through the same element increases, the lines 33 representing intervals between elements to be simultaneously excited, the elements being arranged in the ultrasonic transmission direction. Whichever groups of elements to be simultaneously excited is excited, the intervals between elements arranged in the direction parallel to the ultrasonic scanning direction and to be simultaneously excited extend, whereby the intensity of grating lobes becomes stronger.

FIG. 13 illustrates the arrangement of triangular ultrasonic elements. Even if the ultrasonic scanning direction viewed from the side of the upper surface changes, a shift in an interval between triangular elements arranged in the ultrasonic transmission direction and to be simultaneously excited is larger than a shift in an interval between quadrangular elements. The area of each element within the same element interval shrinks accordingly. For this reason, this arrangement has a disadvantage in that the area of the sensor becomes smaller when the sensor has the same number of elements. However, each quadrangular element can be composed of or replaced with two triangular elements, and each hexagonal element can be composed of or replaced with six triangular elements. In addition, even if two element interval lines pass through each quadrangular element or each hexagonal element, the number of times when multiple element interval lines pass through the same triangular element decreases. Thus, the arrangement of the triangular elements has an advantage that the intensity of grating lobes can be weaker with respect to the arrangement of the quadrangular elements and the arrangement of the hexagonal elements.

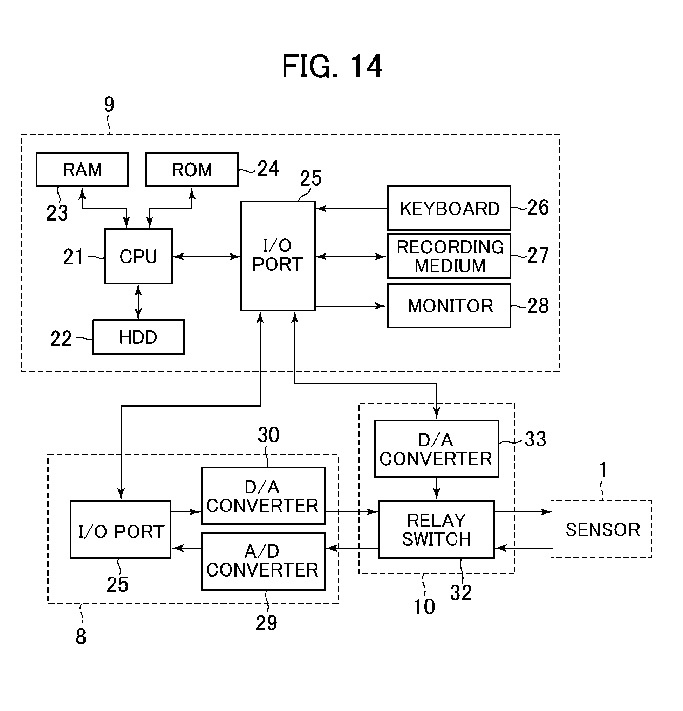

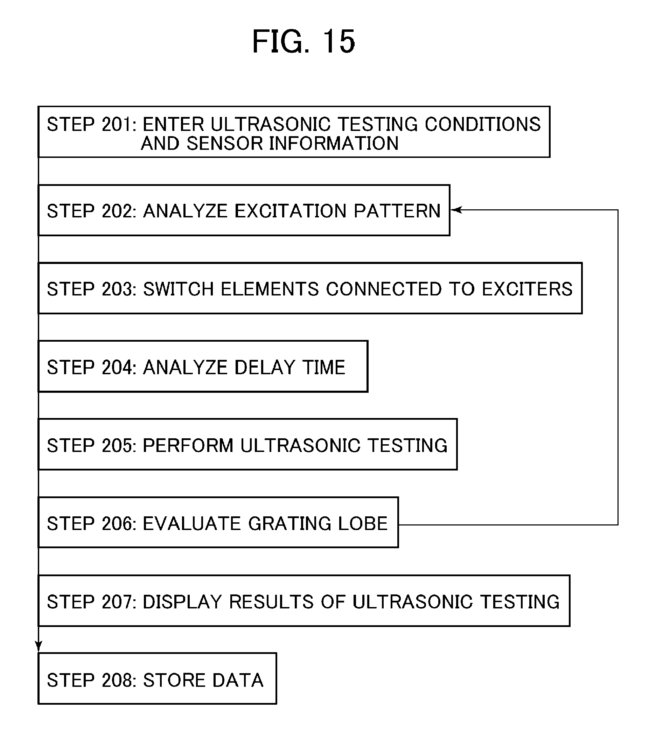

The ultrasonic testing method that is performed by use of the sensor with the elements in accordance with the algorithm described with reference to FIGS. 11A and 11B is described with reference to FIGS. 14 and 15. FIG. 14 is a block diagram of the ultrasonic testing system while FIG. 15 is a flowchart of the ultrasonic testing method.

Step 201 is a step of entering the ultrasonic testing conditions used in step 101, an allowable value of the intensity of side lobes, and the sensor information. In step 201, the ultrasonic scanning direction viewed from the side of the upper surface may be added to the ultrasonic testing conditions.

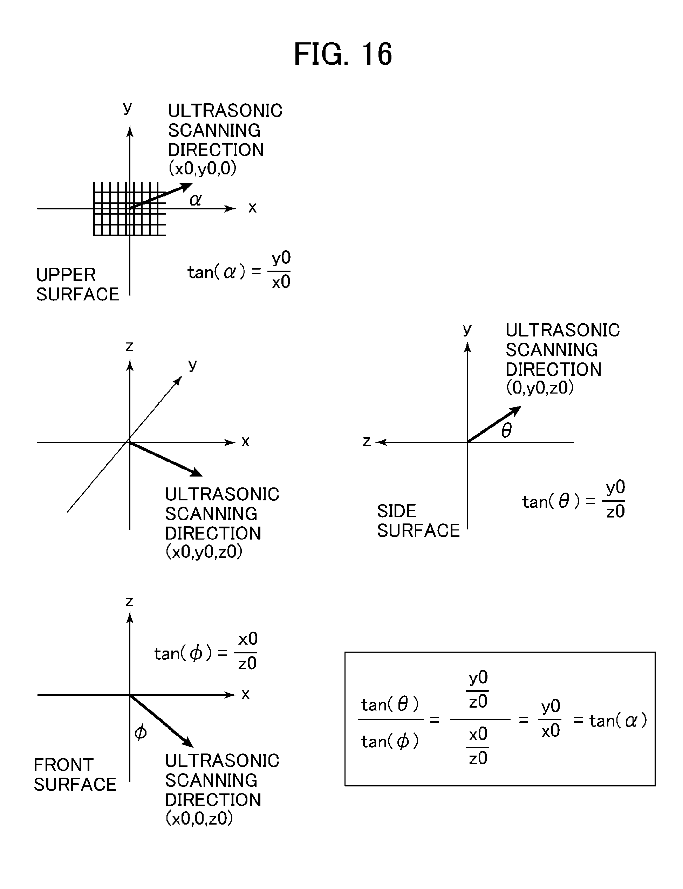

Step 202 is a step of determining a pattern of simultaneously exciting elements on the basis of the conditions entered in step 201. The scanning direction $\alpha$ viewed from the side of the upper surface and to be expressed according to Equation (3) is analyzed with a scanning angle $\phi$ of the front surface and a scanning angle $\theta$ of the side surface (refer to FIG. 16).

$$\tan(\alpha) = \tan(\theta) / \tan(\phi) \qquad \text{Equation (3)}$$

In Equation (3), a program for calculating $\alpha$ is stored in at least one of the HDD and the ROM, and the CPU executes the program and calculates $\alpha$. Alternatively, the scanning direction viewed from the side of the upper surface may be added to the ultrasonic testing conditions used in step 201, and the calculation of the value $\alpha$ may be omitted.

In the following step, a distance d between element interval lines parallel to the ultrasonic scanning direction of elements to be simultaneously excited with a single exciter is analyzed. The program for calculating Equation (1) is stored in at least one of the ROM 24, the RAM, and the HDD. The distance d is configured to fall within "the value n = 1 to 2" in Equation (1). A value obtained by dividing the calculated distance d by an actual element interval represents the number of elements arranged in the ultrasonic scanning direction and to be simultaneously excited. Since this value is half-integral, a value obtained by rounding the half-integral value off to the nearest whole number or rounding the half-integral value down or up to the nearest whole number is an initial number of elements to be simultaneously excited. The CPU determines elements to be simultaneously excited on the basis of the calculated ultrasonic scanning direction and the interval between ultrasonic elements.

Step 203 is a step of operating the switch for switching the connections between the exciters and the elements. In the present embodiment, the relay switches illustrated in FIG. 9 are used as relay circuits. The CPU of the personal computer transmits signals to power on or off the relay circuits to D/A converters 33 of the switch. The D/A converters 33 convert the switch signals into electric signals and output the electric signals to the relay circuits 32 so as to control and power on or off the relay circuits 32.

Step 204 is a step of analyzing the delay time. The method of the analysis is the same as step 104.

Step 205 is a step of performing the ultrasonic testing. A procedure for the ultrasonic testing is the same as step 105.

Step 206 is a step of evaluating the intensity of grating lobes (or evaluating noise). The number of elements to be simultaneously excited is increased or reduced on the basis of the intensity of the grating lobes. Steps 202 to 206 are repeated until the intensity of the grating lobes becomes equal to an appropriate intensity.

Step 207 is a step of displaying and storing results of the ultrasonic testing. Although results of the ultrasonic testing are displayed for each measurement and whether the intensity of the grating lobes are high or low is confirmed in the first embodiment, the intensity of the grating lobes are automatically controlled and only the final results of the ultrasonic testing are displayed in the second embodiment.

Since the present invention is configured in the aforementioned manner, a high sensitivity of the three-dimensional ultrasonic testing and a high S/N ratio can be achieved by allowing grating lobes with a certain intensity or less to be incident in the same manner as the first embodiment. Even if an inspection object is changed to another object, the other object can be inspected with the same sensor and the same ultrasonic testing device. Thus, it is not necessary to develop sensors for each inspection object, thereby reducing the development cost. Furthermore, since the connections between the exciters and the elements are electrically switched, the second embodiment has an advantage that the ultrasonic testing can be performed at a higher speed than in the first embodiment.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

DESCRIPTION OF REFERENCE NUMERALS

| | |
|---|---|
| 1: | Matrix array sensor |
| 2: | Object to be inspected |
| 3: | Ultrasonic wave |
| 5: | Element |
| 8: | Ultrasonic testing device |
| 9: | Personal computer |
| 10: | Connection element switch |
| 21: | CPU |
| 22: | Hard disk drive (HDD) |
| 23: | Random access memory (RAM) |
| 24: | Read only memory (ROM) |
| 25: | I/O port |
| 26: | Keyboard |
| 27: | Recording medium |
| 28: | Monitor |
| 29: | A/D converter |
| 30: | D/A converter |
| 31: | Relay switch |
| 32: | Relay circuit |
| 33: | Line representing interval between elements to be simultaneously excited |
| Step 101: | Step of entering ultrasonic testing conditions and sensor information |
| Step 102: | Step of analyzing excitation pattern |
| Step 103: | Step of switching connected elements |
| Step 104: | Step of analyzing delay time |
| Step 105: | Step of performing ultrasonic testing |
| Step 106: | Step of evaluating intensity of grating lobe |
| Step 107: | Step of displaying and storing results of ultrasonic testing |
| Step 201: | Step of entering ultrasonic testing conditions and sensor information |
| Step 202: | Step of analyzing excitation pattern |
| Step 203: | Step of switching elements connected to exciters |
| Step 204: | Step of analyzing delay time |
| Step 205: | Step of performing ultrasonic testing |
| Step 206: | Step of evaluating intensity of grating lobe |
| Step 207: | Step of displaying results of ultrasonic testing |
| Step 208: | Step of storing data |

# EP 2 840 391 A1

**Claims**

1. An ultrasonic testing sensor comprising ultrasonic elements (5) two-dimensionally arrayed, wherein a length of a longest proportion of each of the ultrasonic elements (5) is smaller than or equal to a wavelength of an ultrasonic wave (3) to be transmitted.

2. An ultrasonic testing sensor according to claim 1, wherein the ultrasonic elements (5) are rectangular and said longest proportion is a longest side.

3. An ultrasonic testing sensor according to claim 1, wherein the ultrasonic elements (5) are hexagonal and said longest proportion is an orthogonal line.

4. An ultrasonic testing sensor according to claim 1, wherein the ultrasonic elements (5) are triangular and said longest proportion is a side.

5. The ultrasonic testing sensor according to claim 4,
wherein a pair of adjacent triangular ultrasonic elements (5) form the rectangular ultrasonic elements (5) according to claim 1.

6. The ultrasonic testing sensor according to claim 4,
wherein the length of the longest side of each of the ultrasonic elements (5) is smaller than or equal to a half of the wavelength of the ultrasonic wave (3) to be transmitted, and
wherein a group of six adjacent triangular ultrasonic elements (5) form one of the hexagonal ultrasonic elements (5) of the ultrasonic testing sensor according to claim 3.

7. An ultrasonic testing method where the ultrasonic testing sensor is used according to any of claims 1 to 6, comprising:

   entering an ultrasonic testing condition, a shape of each element (5) of a sensor, an interval between elements (5), a number of the element (5), and an arrangement of the element (5);
   determining an element (5) to be simultaneously excited with a single exciter;
   performing ultrasonic testing after transmitting and receiving an ultrasonic wave (3);
   evaluating, on a basis of an S/N ratio of an ultrasonic testing result, validity of an arrangement of the element (5) to be simultaneously excited with the single exciter; and
   redetermining an element (5) to be simultaneously excited with the single exciter if the S/N ratio is not appropriate, wherein a total length d, extending in a direction parallel to an ultrasonic scanning direction, of the element (5) to be simultaneously excited with the single exciter is controlled to be in a range ensuring that $2d \cdot \sin\theta = n \cdot \lambda$, where $\lambda$ is a wavelength of an ultrasonic wave (3), n is an integer of 1 or 2, and $\theta$ is an angle at which the ultrasonic wave (3) is incident.

8. The ultrasonic testing method according to claim 7, further comprising
switching the element (5) to be simultaneously excited with the single exciter on a basis of a result of calculating the element (5) to be simultaneously excited with the single exciter.

9. The ultrasonic testing method according to claim 7, further comprising:

   repeatedly performing the ultrasonic testing on a basis of a measured intensity of a grating lobe until the intensity of the grating lobe falls within a setting range; and
   changing the element (5) to be simultaneously excited with the single exciter.

# FIG. 1A

PRINCIPLE OF PHASED ARRAY METHOD

POSITION OF ELEMENT

DELAY TIME

5

# FIG. 1B

THREE-DIMENSIONAL ULTRASONIC TESTING METHOD

5

1

2

3

AXIAL DIRECTION

RADIAL DIRECTION

FOCAL
POINT

# FIG. 2

GENERATION OF SIDE LOBE (GRATING LOBE) CAUSES REDUCTION IN S/N RATIO

ULTRASONIC ELEMENTS

INTERVAL BETWEEN ELEMENTS — d

ANGLE AT WHICH SIDE LOBE IS GENERATED

$\theta$

MAIN LOBE

$d \cdot \sin \theta = n \lambda$

# FIG. 3A

CONVENTIONAL SENSOR

→|┤|← INTERVAL BETWEEN ELEMENTS ≦ λ/2

WITHOUT GRATING LOBE

ULTRASONIC
SCANNING
RANGE

# FIG. 3B

LOW-SENSITIVITY REGION

SIMULTANEOUSLY EXCITED ELEMENTS

NO GRATING LOBE
HAS BEEN INCIDENT

ULTRASONIC
SCANNING
RANGE

ULTRASONIC
TESTING ENABLED
LOW SENSITIVITY

# FIG. 3C

HIGH-SENSITIVITY REGION

SIMULTANEOUSLY EXCITED ELEMENTS

LOW-INTENSITY
GRATING LOBE
IS INCIDENT

ULTRASONIC
TESTING ENABLED
HIGH SENSITIVITY

# FIG. 4

FRONT
SURFACE

FOCAL
POINT

SIDE
SURFACE

UPPER
SURFACE

SIDE
SURFACE

FRONT
SURFACE

# FIG. 5A
## WIDE SCANNING

# FIG. 5B
## NARROW SCANNING

# FIG. 5C
ONE-AXIS NARROW SCANNING 1

# FIG. 5D
ONE-AXIS NARROW SCANNING 2

14

# FIG. 6

REGION REQUIRING EVALUATION OF WHETHER OR NOT REGION IS USABLE

THEORETICAL VALUE n = 1

THEORETICAL VALUE n = 2

UNUSABLE REGION

ANGLE AT WHICH GRATING LOBE IS GENERATED [°]

USABLE REGION

INTERVAL BETWEEN ELEMENTS

# FIG. 7A

LOW-SENSITIVITY REGION

SIMULTANEOUSLY EXCITED ELEMENTS

ULTRASONIC SCANNING RANGE

NO GRATING LOBE HAS BEEN INCIDENT

ULTRASONIC TESTING ENABLED LOW SENSITIVITY

# FIG. 7B

HIGH-SENSITIVITY REGION

SIMULTANEOUSLY EXCITED ELEMENTS

LOW-INTENSITY GRATING LOBE IS INCIDENT

ULTRASONIC TESTING ENABLED HIGH SENSITIVITY

# FIG. 7C

LOW-S/N-RATIO REGION

SIMULTANEOUSLY EXCITED ELEMENTS

HIGH- INTENSITY GRATING LOBE IS INCIDENT

ULTRASONIC TESTING DISABLEDD

# FIG. 8

# FIG. 9

# FIG. 10

STEP 101: ENTER ULTRASONIC TESTING CONDITIONS
AND SENSOR INFORMATION

STEP 102: CALCULATE EXCITATION PATTERN

STEP 103: SWITCH ELEMENTS CONNECTED TO EXCITERS

STEP 104: CALCULATE DELAY TIMES

STEP 105: PERFORM ULTRASONIC TESTING

STEP 106: EVALUATE GRATING LOBE

ALLOWABLE MAXIMUM VALUE

STEP 107: STORE DATA

# FIG. 11A

CONVENTIONAL SCANNING

SINGLE EXCITER EXCITES SINGLE ELEMENT

WIDTH LIMITED BY DIRECTION IN WHICH GRATING LOBE IS GENERATED

ULTRASONIC TRANSMISSION DIRECTION

# FIG. 11B

HIGH-SENSITIVITY SCANNING

SINGLE EXCITER EXCITES MULTIPLE ELEMENTS

WIDTH LIMITED BY DIRECTION IN WHICH GRATING LOBE IS GENERATED

ULTRASONIC TRANSMISSION DIRECTION

# FIG. 12

CHANGES IN LENGTHS OF SIDES UPON CHANGE
IN SCANNING ANGLE ARE SMALL
SENSOR AREA WHEN SENSOR HAS SAME NUMBER
OF ELEMENTS IS INCREASED

NUMBER OF TIMES WHEN TWO ELEMENT INTERVAL
LINES PASS THROUGH ONE ELEMENT INCREASES
NOISE INCREASES

# FIG. 13

CHANGES IN LENGTHS OF SIDES UPON CHANGE IN
SCANNING ANGLE ARE LARGE
SENSOR AREA WHEN SENSOR HAS SAME NUMBER
OF ELEMENTS IS REDUCED

NUMBER OF TIMES WHEN TWO ELEMENT INTERVAL
LINES PASS THROUGH ONE ELEMENT IS REDUCED
NOISE IS REDUCED

# FIG. 14

# FIG. 15

STEP 201: ENTER ULTRASONIC TESTING CONDITIONS AND SENSOR INFORMATION

STEP 202: ANALYZE EXCITATION PATTERN

STEP 203: SWITCH ELEMENTS CONNECTED TO EXCITERS

STEP 204: ANALYZE DELAY TIME

STEP 205: PERFORM ULTRASONIC TESTING

STEP 206: EVALUATE GRATING LOBE

STEP 207: DISPLAY RESULTS OF ULTRASONIC TESTING

STEP 208: STORE DATA

# FIG. 16

y    ULTRASONIC
     SCANNING
     DIRECTION
     (x0,y0,0)

α    x

UPPER
SURFACE

$$\tan(\alpha) = \frac{y0}{x0}$$

z    y
x

ULTRASONIC
SCANNING
DIRECTION
(x0,y0,z0)

y    ULTRASONIC
     SCANNING
     DIRECTION
     (0,y0,z0)

z ←  θ

SIDE
SURFACE

$$\tan(\theta) = \frac{y0}{z0}$$

z

$$\tan(\phi) = \frac{x0}{z0}$$

x

φ

FRONT
SURFACE

ULTRASONIC
SCANNING
DIRECTION
(x0,0,z0)

$$\frac{\tan(\theta)}{\tan(\phi)} = \frac{\dfrac{y0}{z0}}{\dfrac{x0}{z0}} = \frac{y0}{x0} = \tan(\alpha)$$

Europäisches
Patentamt

European
Patent Office

Office européen
des brevets

## EUROPEAN SEARCH REPORT

Application Number

EP 14 18 0996

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/53009 A1 (KONINKL PHILIPS ELECTRONICS NV [NL]) 26 July 2001 (2001-07-26) | 1-3 | INV. G01N29/22 G01N29/24 |
| Y | * abstract * * page 2, line 3 - line 25 * * figures 1, 2, 3a * | 4-9 | G01N29/26 G01N29/32 G10K11/34 |
| X | US 2009/048789 A1 (YU LINGYU [US] ET AL) 19 February 2009 (2009-02-19) | 1,2 | |
| Y | * abstract * * paragraph [0103] - paragraph [0105] * * figure 2c * | 4-9 | |
| Y | US 2010/251821 A1 (MIZOTA HIROHISA [JP] ET AL) 7 October 2010 (2010-10-07) * abstract * * paragraph [0055] - paragraph [0058] * * figures 2, 23 * | 7-9 | |
| Y | US 2012/065504 A1 (SANDRIN LAURENT [FR] ET AL) 15 March 2012 (2012-03-15) * paragraph [0031] * * figure 3 * | 4-6 | |

TECHNICAL FIELDS
SEARCHED      (IPC)

G01N
G10K

The present search report has been drawn up for all claims

| Place of search | Date of completion of the search | Examiner |
|---|---|---|
| Munich | 19 January 2015 | Rouault, Patrick |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

**ANNEX TO THE EUROPEAN SEARCH REPORT
ON EUROPEAN PATENT APPLICATION NO.**

EP 14 18 0996

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2015

| Patent document cited in search report | | Publication date | Patent family member(s) | | Publication date |
|---|---|---|---|---|---|
| WO 0153009 | A1 | 26-07-2001 | EP | 1165258 A1 | 02-01-2002 |
| | | | JP | 2003520526 A | 02-07-2003 |
| | | | US | 6384516 B1 | 07-05-2002 |
| | | | US | 2002130591 A1 | 19-09-2002 |
| | | | WO | 0153009 A1 | 26-07-2001 |
| US 2009048789 | A1 | 19-02-2009 | NONE | | |
| US 2010251821 | A1 | 07-10-2010 | US | 2010251821 A1 | 07-10-2010 |
| | | | US | 2011126625 A1 | 02-06-2011 |
| US 2012065504 | A1 | 15-03-2012 | AT | 520021 T | 15-08-2011 |
| | | | CN | 101529241 A | 09-09-2009 |
| | | | EP | 2181324 A2 | 05-05-2010 |
| | | | ES | 2370735 T3 | 22-12-2011 |
| | | | FR | 2902308 A1 | 21-12-2007 |
| | | | JP | 5426368 B2 | 26-02-2014 |
| | | | JP | 2009539528 A | 19-11-2009 |
| | | | US | 2012065504 A1 | 15-03-2012 |
| | | | WO | 2007144520 A2 | 21-12-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012117825 A